# EUROPEAN PATENT APPLICATION

(11) **EP 4 623 675 A1**
(43) Date of publication of application: **01.10.2025**
(21) Application number: 24166929.0
(22) Date of filing: 27.03.2024
(51) Int. Cl.: A01G 23/08, A01G 23/083, A01G 23/093

(54) **SYSTEM AND METHOD FOR A FORESTRY VEHICLE AND FORESTRY VEHICLE**

(71) Applicant: Deere & Company, Moline, IL 61265 (US)
(72) Inventor: Palmroth, Mikko, Mannheim (DE); Siltanen, Vesa, Mannheim (DE); Horkko, Sami, Mannheim (DE)
(74) Representative: Reichert, Christian

(57) **Abstract**

The invention describes a system for a forestry vehicle, the system adapted to realize a movement of a boom arrangement during a feed process of the forestry vehicle, the vehicle adapted to have a boom arrangement, the boom arrangement having a slewing device, a boom tip and an extension boom, the boom tip having a rotator, adapted to rotate a connected working device around a vertical axis, the working device adapted to be a harvester head, the system controlling the boom arrangement so that the movement of the stem through the harvester head during feeding over the ground is at least partly compensated by movement of the boom tip, wherein the movement is in a direction of a longitudinal axis of the stem.

## Description

The present invention concerns system and method for a forestry vehicle and a forestry vehicle.

Mobile work machines, in particular, forestry equipment and forestry machines, e.g. harvesters and forwarders, have an articulated boom and a tree stem processing tool at the tip of the boom. The tool can be i.e. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

The mobile work machines comprise an articulated boom arrangement with the tool attached to a boom tip of the boom assembly. Such tools handle heavy load, that may comprise a load of soil or logs or raw material. Usually, such booms are controlled by hydraulic actuators that are driven by hydraulic pressure from one or more pumps. The pumps are usually powered by the primary power source of the vehicle. The boom arrangement usually comprises a slewing device, connected to the chassis of the vehicle and used to turn the boom arrangement and to angle the slewing device in a vertical angle to increase the range of the boom arrangement. A second boom can be connected to the slewing device by a movable joint and articulated by hydraulic actuators. The second boom enables vertical movement and also increases range of the boom arrangement. A third boom can be connected to the second boom by another joint and is articulated by a hydraulic actuator. The third boom can be, i.e. an extension boom, having an extendable boom in a linear movement. At the end of the extension boom is usually provided a boom tip that is used to connect the various working tool, i.e. a harvester head or a grapple. In order to turn the working tool the boom tip can comprise a rotator, that is hydraulically actuated to move the working tool around a vertical axis.

A harvester head comprises several movable knives that are used to grab the log/tree with the harvester head. These knives are hydraulically actuated and controlled by the controller mounted on the harvester tool. Once the tree is grabbed with the harvester tool, a saw blade, usually at a bottom side of the harvester head, is activated to cut the tree/stem. After the cutting process the tree will fall over, only being fixated in the harvester head by the knives being closed around the stem. Usually, within the harvester head, feeding wheels are activated to pull/push the stem through the harvester head and the knives, so that bark/branches are removed, and the log/stem is cut up into log pieces of determined size.

During the feeding process the boom and the harvester head are held in a static position or are moved manually being controlled by the operator. When the boom is in static position, the stem must move through the harvester head while being pulled over the ground and increasing pressure on the contact area between the knives and the stem. This can lead to an opening movement of the upper knives or requires compensation of the closing force, leading to an increase in hydraulic pressure of the hydraulic actuators of the knives. This can lead to increase wear and increased power consumption of the forestry vehicle.

When the boom is manually moved during the feeding operation, the operator must manually adapt the movement speed and direction to the feeding speed and operate the boom arrangement so that the movement is within parameters. If the operator is unable to perform the correct movement, the stem also increases pressure on the knives, leading also to an opening movement of the knives or requiring an increase in the closing force and hydraulic pressure. The felling process is repeated during the felling operation leading to stress and workload of the operator resulting in fatigue and possible performance loss.

It is an object of the present invention to overcome these disadvantages.

The invention is a system for a forestry vehicle, the system adapted to realize a movement of a boom arrangement during a feed process of the forestry vehicle, the vehicle adapted to have a boom arrangement, the boom arrangement having a slewing device, a boom tip and an extension boom, the boom tip having a rotator, adapted to rotate a connected working device around a vertical axis, the working device adapted to be a harvester head, the system comprising sensors for the boom arrangement to detect the position of the boom tip, an angle sensor for the rotator, detecting the turning angle of the rotator, a sensor for the harvester head, adapted to detect a feeding speed of a stem in the harvester head during processing, a CPU unit receiving at least the speed and angle data from the harvester head and the position of the boom tip, processing and calculating a movement of the boom arrangement and the boom tip that at least partly compensates the speed of the feed operation of the stem over the ground, controlling the boom arrangement so that the movement of the stem through the harvester head during feeding over the ground is at least partly compensated by movement of the boom tip, wherein the movement is in a direction of a longitudinal axis of the stem.

The system enables an automated movement of the boom arrangement and the boom tip during the feeding process of the harvester head. The operator is controlling the harvester head to grab and fell the tree and starts the feeding process to delimb the tree during the feeding process. The boom arrangement and the boom tip are automatically oriented in the direction of the feeding, i.e. the length axis of the tree and moves along this axis in the opposite direction than the feeding progress of the tree through the harvester head. The operator is relieved of controlling the boom arrangement movement during this time period. The feeding process is improved as by the movement of the boom tip and the harvester head the stem is evenly processed. The stem does not increase pressure in an opening direction of the knives so that the stem is undamaged, wear on the knives is avoided and fuel consumption is reduced as the closing force of the knives is stable.

In another embodiment the sensors can be adapted to measure the extension position of hydraulic actuators in the boom arrangement.

The sensors are measuring the increment of the actuator extension on all booms are deliver the results to the CPU for calculation. The sensors enable the localization of the boom tip and provide reliable data. The sensor placement is limited to each hydraulic actuator which reduces complexity and maintenance effort.

In another embodiment the sensors can be adapted to measure the positions of the induvial booms in the boom arrangement.

The sensors can be based on inertia measurements. The sensors can be places on the individual booms of the boom arrangement so that a placement on the hydraulic actuators is avoided offering more adaptable placement of the sensors. Additionally, the sensors could transmit the data by wireless communication protocol avoiding the provision of data lines, i.e. cables.

In another embodiment the sensors can be adapted to measure the extension of the extension boom and the positions of the induvial booms in the boom arrangement.

All sensors except the extension boom sensors can be based on inertia measurement. The extension boom, undergoing a linear movement can have an extension measurement. This simplifies the design of the system and enables detection of the position of the boom tip with accuracy.

In another embodiment the boom arrangement can be adapted to comprise a slewing mechanism and the system comprises a slewing angle sensor and a turning angle sensor.

The slewing mechanism enables the tilting of the boom arrangement and the turning around a vertical axis of the vehicle. The sensors on the slewing mechanism allow the exact detection of the boom tip position and exact movement of the boom arrangement with the assistance of the slewing mechanism.

In another embodiment the CPU can enable a movement speed of the boom tip proportional to the feeding speed or a constant boom tip speed movement.

The system moves the boom tip and thus the harvester head in a determined proportion of the feeding speed. The feeding speed can vary depending on the tree species and the stem diameter. This also affects the weight of the tree. The movement proportional to the feeding speed enables to reduce the stress on the knives in relation to the weight and size of the stem and offers reduced fuel consumption and maintenance effort.

A constant movement of the boom tip, i.e. predetermined by the operator increases a homologation in the workflow and reduces required work time and increases efficiency of the operator. In parallel the movement reduces force on the knives and fuel cost and wear.

In another embodiment the system can automatically stop boom tip movement when the feed process is terminated.

The automatic stopping is determined when the feeding process is stopped or finished. The operator is relieved from manually setting a stop to the boom movement. Any impulses due to inertia is avoided and the operator comfort is increased. The reduced vibration in the cabin increases the accuracy of the operator using the control surfaces and reduces fatigue.

In another embodiment the feeding speed detection can be realized depending on a feed control current.

The current detected is depending on the hydraulic motor or electric motor driving the feeding wheels. The current is proportional to the feeding speed or the torque required to pull on the stem in the harvester head. If the current level is below a certain value, the CPU can determine that the feeding movement is halted. This also could avoid movement of the boom arrangement if the feeding wheel motors stall as the current flow also drops in such circumstances.

In another embodiment the system can determine the boom tip movement speed depending on a diameter of the stem and the type of tree.

The opening angle of the knives holding the stem can be detected by an additional angle sensor in the joint of the knives. The tree type can either be detected by an optical system, i.e. camera, or be manually entered into the CPU by the operator making a visual inspection. Depending on these values the CPU and the system can determine if bigger branches are present or if the stem is above the average weight and thus has a higher inertia. The swinging of the boom arrangement and of the whole vehicle is reduced and the wear on the hydraulic motors of the knives is limited.

Another invention is a method for a forestry vehicle, adapted to realize a movement of a boom arrangement during a feed process of the forestry vehicle, the vehicle adapted to have a boom arrangement, the boom arrangement having a slewing device, a boom tip and an extension boom, the boom tip having a rotator, adapted to rotate a connected working device around a vertical axis, the working device adapted to be a harvester head, the vehicle comprising sensors for the boom arrangement to detect the position of the boom tip, an angle sensor for the rotator, detecting the turning angle of the rotator, a sensor for the harvester head, adapted to detect a feeding speed of a stem in the harvester head during processing, a CPU unit receiving at least the speed and angle data from the harvester head and the position of the boom tip, and identifying the position of the boom tip using the sensors of the boom arrangement, further identifying the orientation of the harvester head using the rotator sensor data and identifying a feeding speed of a stem in the harvester head, calculating and executing a movement of the boom tip and the boom arrangement so that the feeding movement of the stem over the ground is partly compensated by a simultaneous movement of the boom tip during the feeding process, wherein the movement is in a direction of a longitudinal axis of the stem.

The method enables an automated movement of the boom arrangement and the boom tip during the feeding process of the harvester head. The operator is controlling the harvester head to grab and fell the tree and starts the feeding process to delimb the tree during the feeding process. The boom arrangement and the boom tip are automatically oriented in the direction of the feeding, i.e. the length axis of the tree and moves along this axis in the opposite direction than the feeding progress of the tree through the harvester head. The operator is relieved of controlling the boom arrangement movement during this time period. The feeding process is improved as by the movement of the boom tip and the harvester head the stem is evenly processed. The stem does not increase pressure in an opening direction of the knives so that the stem received less damage and wear on the knives is avoided and fuel consumption is reduced as the closing force of the knives is stable.

Another invention is a forestry vehicle, comprising a boom arrangement having a slewing mechanism and an extension boom with a boom tip, a rotator attached to the boom tip, a harvester head working device attached to the rotator, an angle sensor on the rotator, adapted to measure the horizontal angle of the rotator, an angle sensor on the slewing device, adapted to measure the horizontal angle of the boom arrangement, position sensors on the hydraulic actuators of the boom arrangement to measure the extension of the actuators, a sensor on the harvester head, adapted to measure the speed or rotation of feeding wheels on the harvester head, a CPU connected to the sensors, adapted to receive the sensor input, so that the CPU can calculate the position of the boom tip, and the feeding speed of the harvester head, wherein the CPU calculates a movement of the boom tip ,so that the stem movement above the ground is at least partly compensated and the boom tip and boom arrangement moves against the direction of the elongation of the stem during feeding.

The forestry vehicle enables an automated movement of the boom arrangement and the boom tip during the feeding process of the harvester head. The operator is controlling the harvester head to grab and fell the tree and starts the feeding process to delimb the tree during the feeding process. The boom arrangement and the boom tip are automatically oriented in the direction of the feeding, i.e. the length axis of the tree and moves along this axis in the opposite direction than the feeding progress of the tree through the harvester head. The operator is relieved of controlling the boom arrangement movement during this time period. The feeding process is improved as by the movement of the boom tip and the harvester head the stem is evenly processed. The stem does not increase pressure in an opening direction of the knives so that the stem is undamaged, wear on the knives is avoided and fuel consumption is reduced as the closing force of the knives is stable.

Further advantages are described in the following figures, wherein
Figure 1 shows a view of a forestry vehicle, i.e. a forest harvester;
Figure 2 displays a tool for the vehicle, i.e. a harvester head.

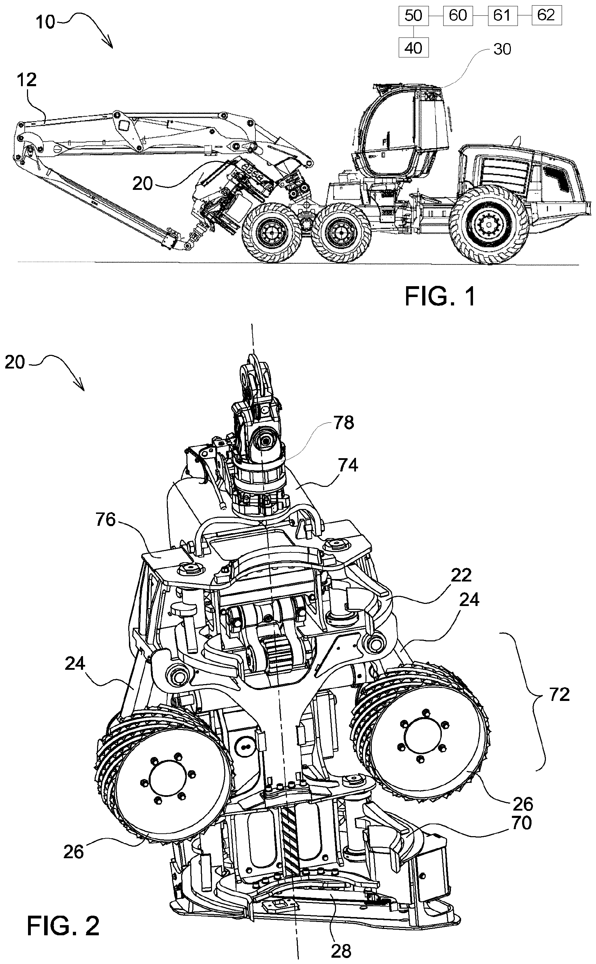

Figure 1 shows a forestry vehicle 10, i.e. a harvester. The vehicle comprises front and rear chassis which are articulated and a driver cabin 30 for the operator. The vehicle 10 has a boom arrangement 12 to which a timber working device 20, i.e. a harvester head is attached. The boom assembly 12 can rotate and tilt, and to extend and to rotate the harvester head 20 by the arrangement of the individual booms. The first boom attached to the vehicle chassis is a slewing mechanism, enabled to tilt up and down and to rotate around a vertical oriented axis so that the complete boom arrangement can be moved around the forestry vehicle 10. The slewing mechanism is connected with another boom which can be turned up and down and is transmitting the forces of the boom tip to the slewing mechanism. The third boom of the boom arrangement 12 is an extension boom which is enabled to turn up and down and to extend an inner boom in a linear fashion so that the reach of the boom tip is adaptable. The boom tip comprises a rotator 78 to which the harvester head 20 is attached and can be rotated along a vertical axis to face a tree stem.

The harvester head 20 of the present invention is shown in Figure 2.

It comprises a base frame 76 which is extending along a feeding axis and a movably fixed tilt bracket 74 which is attachable to the boom assembly 12 of the vehicle 10. The frame 76 contains all necessary parts and devices to ensure the operation of the harvester head 20, such as controller, hydraulic hubs, hydraulic lines, hydraulic motors, and hydraulic valves. It further comprises movable arms 24 rotatably holding the feeding wheels 26 so that these can be pushed against the stem surface. In a vertical direction, above the feeding wheels 26 are the upper knives 22 and below are the lower knives 70 which are controlled by hydraulic actuators usually but may also be controlled by electric actuators or motors. At the bottom of the frame 76 the saw blade 28 is placed below the lower knives 70.

For the felling and processing of a tree into logs, the operator extends and maneuvers the boom assembly 12 so that the harvester head 20 can close the upper and lower knives 22, 70 around the tree stem. The operator cuts the tree with the integrated saw 28 felling the tree and holding it at an end with the knives 22, 70 of the harvester head 20. In a next step the drive system 72, consisting of the feeding arms 24 and the feeding wheels 26, is operated so that the feeding wheels 26 by their gripping surface pull or push the stem through the harvester head 20 from the upper 22 to the lower knives 70 so that the stem can be cut into logs of predetermined length, controlled by the drive system 72. In parallel the knives cut any branches extending from the stem. The operator uses the tilt bracket 74 which is articulated by a hydraulic actuator to keep the harvester head in a horizontal orientation so that the knives 22, 70 are extending in a downward direction.

When the feeding wheels 26 transport the stem through the harvester head 20, the knives 22, 70 need to maintain a close grip to ensure the stem stays within operational parameters and is kept safely inside the harvester head 20. Also, the knives 22, 70 are used to remove branches and bark from the stem. This leads to the difficulty that a tight grip may remove the branches easily but at the same time increase the friction of the stem and thus increase the workload on the drive system 72 which can lead to damages to the surface and a loss of quality.

The shape of the stem is also an important factor in that a bend or curved shape will require a constant adaption of the grip of the knives 22, 70, leading to a longer processing time and reduced productivity. The grip may also damage the stem and reduce the wood quality. Damaged trees that are felled may undergo further damage during processing as the wood may have cracks in the stem which can further increase during the processing. Broken branches may complicate the processing as the removal by the knives 22, 70 may require more grip force and as stated above may result in more damage to the stem.

When the stem is in a held state inside the knives 22, 70 gravity and weight of the stem and the weight distribution results in different forces on the upper and lower knives 22, 70. At the beginning of the feeding, the stem is mainly extending on the upper side of the harvester head 20. This results in a force on the upper knives 22 that can result in an opening movement of the upper knives 22. To compensate the forces, the hydraulic force on the hydraulic actuators of the upper knives 22 can be increased. Otherwise, the opening of the knives results in an incomplete shearing of branches and reduced quality of the processed wood. When the stem is further moving through the harvester head 20 the weight distribution moves to the lower side of the harvester head, shifting the opening forces to the lower knives 70 with the same effects on the lower knives 70.

During cutting operation, the upper and lower knives 22, 70 are closed around the stem. The harvester head 20 may only have upper 22 or lower knives 70, this does not change the operation procedure. Further, the harvester head 20 may have more than two feeding wheels 26, such as four, which does not alter the process or use of this invention.

The system comprises sensors 50, 60, 61, 62 to identify the current state of the boom tip and the orientation or the harvester head 20. The tilt angle of the slewing mechanism, the angle of the slewing mechanism, the position of all booms of the boom arrangement 12 and the angle of the rotator 78 are received by the CPU 40 and the orientation of the stem in the harvester head 20 is calculated. At the time the operator initiates the felling and the feed procedure the CPU automatically initiates the movement of the boom arrangement 12 so that the boom tip and the harvester head 20 move along the orientation of the lengthwise axis of the stem being processed wherein the movement is in an opposition direction of the feeding movement.

This movement supports a fluent processing of the stem and at the same time minimizes the forces on the knives 22, 70 by using the inertia of the stem to enable a smooth movement of the stem. The movement speed of the boom arrangement 12 can be of the same as the feeding speed or less if the movement is oriented in the direction of the stem axis.

The invention may detect the stem size or the tree type. The tree type can also be an input of the operator. Depending on this data the speed of the movement of the boom arrangement 12 can be reduced as the inertia of the stem may be increasing with a larger stem. The speed may also be varied as the tree type changes, as different tree types may comprise softer or harder bark or generally develop thicker or thinner branches. This prevents unnecessary wood damage.

## Claims

1. System for a forestry vehicle,
the system adapted to realize a movement of a boom arrangement during a feed process of the forestry vehicle,
the vehicle adapted to have a boom arrangement, the boom arrangement having a slewing device, a boom tip and an extension boom, the boom tip having a rotator, adapted to rotate a connected working device around a vertical axis,
the working device adapted to be a harvester head,
the system comprising
sensors for the boom arrangement to detect the position of the boom tip,
an angle sensor for the rotator, detecting the turning angle of the rotator,
a sensor for the harvester head, adapted to detect a feeding speed of a stem in the harvester head during processing,
a CPU unit receiving at least the speed and angle data from the harvester head and the position of the boom tip,
processing and calculating a movement of the boom arrangement and the boom tip that at least partly compensates the speed of the feed operation of the stem over the ground,
controlling the boom arrangement so that the movement of the stem through the harvester head during feeding over the ground is at least partly compensated by movement of the boom tip, wherein the movement is in a direction of a longitudinal axis of the stem.

2. System according to claim 1, wherein the sensors are adapted to measure the extension position of hydraulic actuators in the boom arrangement.

3. System according to any previous claims, wherein the sensors are adapted to measure the positions of the induvial booms in the boom arrangement.

4. System according to any previous claims, wherein the sensors are adapted to measure the extension of the extension boom and the positions of the induvial booms in the boom arrangement.

5. System according to any previous claims, wherein the boom arrangement is adapted to comprise a slewing mechanism and the system comprises a slewing angle sensor and a turning angle sensor.

6. System according to any previous claims, wherein the CPU enables a movement speed of the boom tip proportional to the feeding speed or a constant boom tip speed movement.

7. System according to any of the previous claims, wherein the system automatically stops boom tip movement when the feed process is terminated.

8. System according to any of the previous claims, wherein the feeding speed detection is realized depending on a feed control current.

9. System according to any of the previous claims, wherein the system determines the boom tip movement speed depending on a diameter of the stem and the type of tree.

10. Method for a forestry vehicle,
adapted to realize a movement of a boom arrangement during a feed process of the forestry vehicle,
the vehicle adapted to have a boom arrangement,
the boom arrangement having a slewing device, a boom tip and an extension boom, the boom tip having a rotator, adapted to rotate a connected working device around a vertical axis,
the working device adapted to be a harvester head,
the vehicle comprising sensors for the boom arrangement to detect the position of the boom tip,
an angle sensor for the rotator, detecting the turning angle of the rotator,
a sensor for the harvester head, adapted to detect a feeding speed of a stem in the harvester head during processing,
a CPU unit receiving at least the speed and angle data from the harvester head and the position of the boom tip, and
identifying the position of the boom tip using the sensors of the boom arrangement, further identifying the orientation of the harvester head using the rotator sensor data and identifying a feeding speed of a stem in the harvester head,
calculating and executing a movement of the boom tip and the boom arrangement so that the feeding movement of the stem over the ground is partly compensated by a simultaneous movement of the boom tip during the feeding process, wherein the movement is in a direction of a longitudinal axis of the stem.

11. Forestry vehicle, comprising
a boom arrangement having a slewing mechanism and an extension boom with a boom tip,
a rotator attached to the boom tip,
a harvester head working device attached to the rotator,
an angle sensor on the rotator, adapted to measure the horizontal angle of the rotator, an angle sensor on the slewing device, adapted to measure the horizontal angle of the boom arrangement,
position sensors on the hydraulic actuators of the boom arrangement to measure the extension of the actuators,
a sensor on the harvester head, adapted to measure the speed or rotation of feeding wheels on the harvester head,
a CPU connected to the sensors, adapted to receive the sensor input,
so that the CPU can calculate the position of the boom tip, and the feeding speed of the harvester head,
wherein the CPU calculates a movement of the boom tip ,so that the stem movement above the ground is at least partly compensated and the boom tip and boom arrangement moves against the direction of the elongation of the stem during feeding.
